# EUROPEAN PATENT SPECIFICATION

(11) **EP 0 850 562 B1**
(45) Date of publication and mention of the grant of the patent: **08.10.2003**
(21) Application number: 97310298.1
(22) Date of filing: 18.12.1997
(51) Int. Cl.: A01K 97/12

(54) **Fish-bite detector**
Bissanzeiger zum Angeln
Indicateur de touche pour la pêche

(30) Priority: 24.12.1996 GB 9626824
(43) Date of publication of application: 01.07.1998
(73) Proprietor: Fox Design International Limited, Chelmsford, Essex CM3 8HQ (GB)
(72) Inventor: Amato, Remo, Hainault, Ilford, Essex, IG6 3UE (GB); Simpson, Nigel, Hainault, Ilford, Essex. IG6 3UE (GB); Fox, Clifford Royston, Chelmsford, Essex, CM3 8HQ (GB)
(74) Representative: Crouch, David John

(56) References cited:
- EP-A- 0 811 321
- GB-A- 2 086 701
- GB-A- 2 299 252
- GB-A- 2 312 363

## Description

The present invention relates to a fish-bite detector having the construction set out in the preamble of claim 1.

Such a detector is disclosed in EP-A-0 570 117. However, the detector disclosed in that earlier specification does not distinguish between line movement in one longitudinal direction thereof, and line movement in the other direction thereof.

A further fish-bite detector which uses magnetic means to generate a detection signal is described in GB-A-2,086,701.

GB-A-2,299,252 discloses two emitter-detector pairs to distinguish between the two possible directions of line movement.

The present invention seeks to provide a detector which can discriminate between these two directions of line movement, using magnetic means.

Accordingly the present invention is directed to a fish-bite detector having the construction set out in the preamble of claim 1, also with the characterising features thereof.

In one preferred construction of the present invention, one of the reed switches is connected to the clock input of a bi-stable flip-flop, and the other is connected to the data input thereof.

Advantageously, it is the reed switch which is switched first when the fishing line moves in a direction corresponding to a paying out of the line, which is connected to the clock input of the flip-flop.

The Q and _Q outputs may be connected to both the set and reset inputs of a second bi-stable flip-flop, the clock input of which is connected to receive an output from a trigger pulse generator connection- to one of the reed switches to generate pulses in dependence upon closure of that reed switch, the _Q output of the second flip-flop being fed back to the data input thereof.

Preferably the trigger pulse generator is connected to receive signals from that reed switch which is connected to the clock input of the first-mentioned flip-flop.

The Q and _Q outputs from the second flip-flop may be connected to a buzzer driver which in turn is connected to a buzzer.

The _Q output of the second flip-flop may be connected to an LED driver which in turn is connected to drive the LED.

The buzzer driver may be so constructed as to cause a first audio signal to be issued when the line moves in a longitudinal direction corresponding to a paying-out of the line, and a second audible signal when the line moves in the other longitudinal direction.

An example of a bite detector made in accordance with the present invention will now be illustrated with reference to the accompanying drawings, in which :
Figure 1 shows a front elevational view of the detector;
Figure 2 shows an interior of a first half of the detector shown in Figure 1;
Figure 3 shows a circuit diagram of electrical circuitry within the interior shown in Figure 2;
Figures 4 and 5 show respective different graphs of different sets of voltage levels at a first bi-stable flip-flop of the circuitry shown in Figure 3 for different directions of longitudinal movement of a fishing line; and
Figures 6 and 7 show respective different sets of voltage levels at a second bi-stable flip-flop of the circuitry shown in Figure 3 for such different directions of line movement.

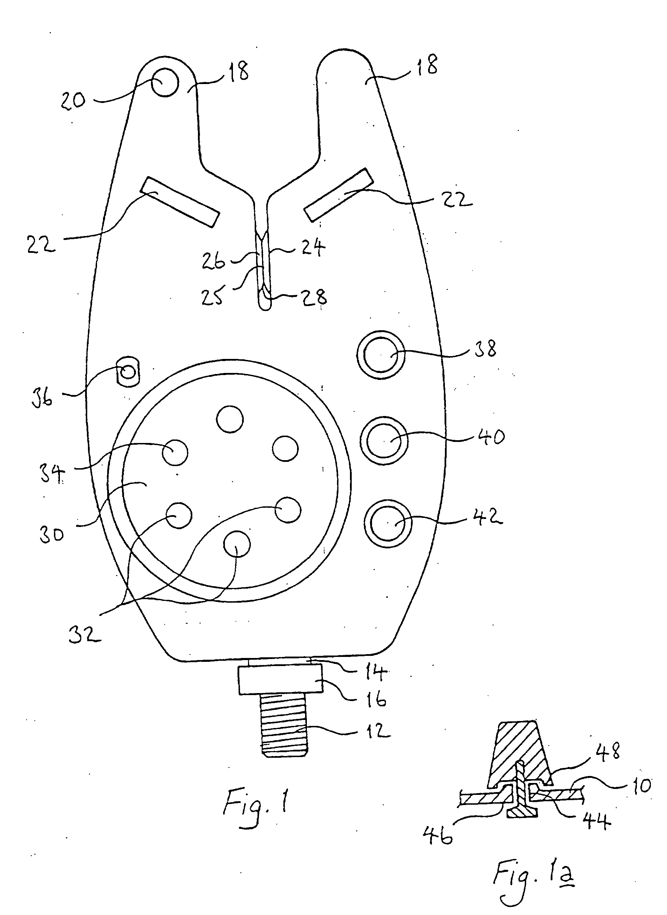

The fish-bite indicator shown in Figure 1 comprises a two-part synthetic plastics injection moulded housing 10 having an external screw-threaded metal shank 12 extending downwardly from its underside. A seal is formed between the housing 10 and the shank 12 by means of an O-ring 14 and a tightening nut 16 which urges the O-ring 14 tightly against the housing 10 and inwardly against the shank 12.

The upper end of the housing 10 is bifurcated, so that it has two generally upwardly extending prongs 18, at the upper end of the left hand of which there is provided a light emitting diode LED 20.

Inwardly recessed ribs 22 are provided at the base of each prong 18 to reinforce the housing in those regions.

A slot 24 extends downwardly from the base of the bifurcation to expose a central portion 25 of a rotary part 26 contained within the housing. This central part is formed with. a waist 28, so that it has the form of a pulley-wheel. A generally circular part 30 of the housing 10 is provided underneath the bifurcation, slightly off-set from the longitudinal bisecting plane thereof, and is provided with a plurality of apertures 32 to permit sound to travel more readily through the housing 10 from a generally circular electromagnetic buzzer diaphragm 34 positioned immediately inwardly of the diaphragm cover 30. Immediately above and slightly to the left of the diaphragm cover 30 there is an on-off/test switch 36 extending outwardly from the housing 10.

Three rotary knobs 38, 40 and 42 are provided as a linear array immediately to the right of the diaphragm cover 30, these knobs being, respectively, a volume control, pitch control and sensitivity control for the buzzer.

As shown in Figure 1a, the housing wall at each knob 38, 40 and 42 is provided with an aperture 44 through which extends a shaft 46 which is rigidly secured to the knob. The wall of the housing 10 is raised at the annulus immediately surrounding the aperture 44. The underside of the knob is provided with a skirt portion 48 which surrounds the raised annulus to form a seal between the knob and the surrounding wall.

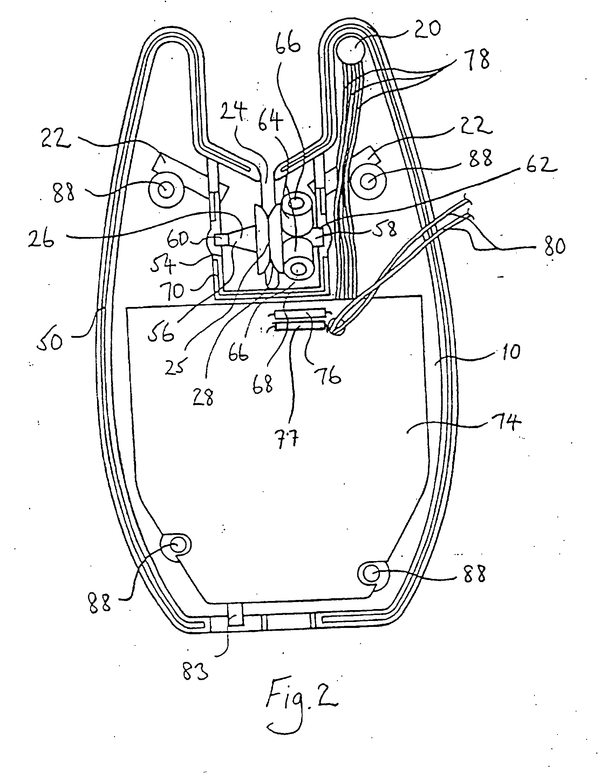

Figure 2 shows the interior of that half of the two-part housing 10 which is visible in Figure 1, with the other half of the housing 10 removed to reveal interior components of the fish-bite indicator. That edge of the housing half which faces the other half of the housing is formed with a longitudinally extending central rib 50. This engages a correspondingly formed longitudinally extending groove formed on the corresponding edge of the other housing part. An inner wall 54 is formed in the housing and generally surrounds the slot 24 to form half of an enclosure which contains the rotary part 26.

The rotary part has a tapering spindle portion 56 extending in an intended horizontal direction away from the central portion 25. A second spindle portion 58 of the rotary part 26 extends outwardly away from the central portion 25 in the opposite direction to that of the spindle portion 56. Respective recesses are formed in respective vertical parts of the inner wall 54 to provide rotary bearing means 60 and 62 respectively for the two spindle portions 56 and 58 of the rotary part 26.

Four cylindrical blocks 64 (only two of which are visible in Figure 2) extend radially outwardly from the rotary axis of the rotary part 26, spaced apart at 90° intervals therearound, and house respective permanent magnets 66. The length of each cylinder 64 and permanent magnet 66 is such that, when the rotary part is rotated, the distal end of each magnet passes adjacent to a bottom 68 of the inner wall 54.

The edges of the inner wall 54 which face the other half of the housing 10, are provided with formations 70 which interengage with corresponding formations formed on corresponding inner edges of the other half of the rotary part enclosure, to form a seal therewith.

The slot 24 in each half of the housing 10 extends to the upper face of the bottom 68 of the enclosure so that any water which finds its way into the enclosure can readily drain outwardly therefrom.

From the foregoing description, it will be appreciated that the housing, together with the inner wall 54, defines a sealed interior. The latter contains a printed circuit board 74 which is fixed to the interior of the housing 10 and which includes two reed switches 76 and 77 positioned one below the other, on the same side of the circuit board as one another, spaced apart from one another in a direction radially away from the axis of rotation of the rotary part 26, and both arranged generally parallel to that axis.

The reed switches 76 and 77 are mounted on the circuit board 74 immediately adjacent to the bottom 68 of the inner wall 54, within range of the magnetic fields of the permanent magnets 66 as the latter pass by the bottom 68 when the rotary part 26 rotates.

The printed circuit board 74 is connected to the LED 20 via leads 78, and power leads 80 extend from the printed circuit board 74 to a 9 volt alkaline battery (not shown).

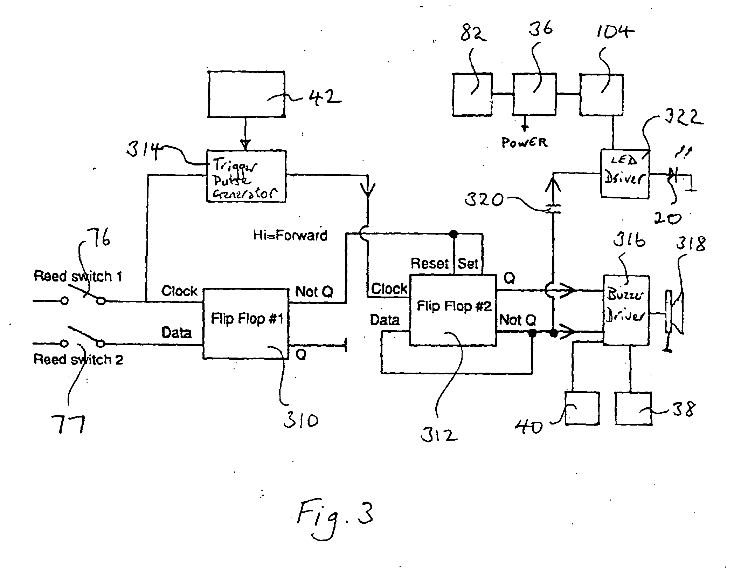

The on-off/test switch 36, the buzzer having the buzzer diaphragm 34, and each of the three control knobs 38, 40 and 42 shown in Figure 1 are all connected to the circuit board 74 to define circuitry shown in greater detail, and described hereinafter, with reference to Figure 3.

Figure 2 shows a bridging wall portion 84 of the housing which extends around an upper flange 86 of the shank 12. The flange 86 and the nut 16 therefore clamp tightly on to the bottom of the wall of the housing 10 to fix the shank 12 rigidly to the housing 10.

Internally screw-threaded horizontally extending portions 88 are formed in the interior of the housing part, and apertures formed in the other housing part in registration with the portions 88 when the two housing parts are brought together, enable screws (not shown) to secure those two housing parts tightly together with the rib 50 engaging the groove.

The manner in which the various parts of the indicator are connected together via the circuit board 74 is shown in Figure 3.

The reed switches 76 and 77 are connected respectively to the clock and-data inputs of a first bi-stable flip-flop 310.

In this particular circuitry, the reed switch 76 is the one which is closed first upon movement of one of the magnets 66 as a result of longitudinal movement of a fishing line over the rotary part 26 in a direction corresponding to pay-out of the line.

The _Q output from the flip-flop 310 is connected to the set and reset inputs of a second bi-stable flip-flop 312. This flip-flop 312 is configured as a divide-by-to-counter.

A trigger pulse generator 314 is connected to receive a signal from the reed switch 76 and to forward trigger pulses to the clock input of the flip-flop 312. The sensitivity control 42 is connected to the trigger pulse generator 314 so that the rate at which trigger pulses are issued therefrom in dependence upon a given frequency of pulses received from the reed switch 76 is dependent upon the setting of the sensitivity control 42.

The _Q output from the second flip-flop 312 is fed back to the data input thereof.

Both the Q and _Q outputs from the bi-stable flip-flop 312 are connected to a buzzer driver 316 which in turn is connected to drive a buzzer 318 provided with the diaphragm 34 shown in Figure 1.

The _Q output from the bi-stable flip-flop is connected via a capacitor 320 to an LED driver 322 which in turn is connected to the LED 20.

The volume control 38 and pitch control 40 are both connected to the buzzer driver 316 in such a manner as to control the volume and pitch of the output from the buzzer, respectively.

The power source 82, the on/off/test switch 36 and the battery test circuit 104 are connected in series in that order, to the LED driver 322 to enable the detector to be switched on and off and also to enable the power source to be tested.

When the detector is installed for use, the fishing line of a fishing rod is passed over the rotary part 26 so that longitudinal movement of the line will rotate that part.

In the event that a fish bite causes the fishing line to be paid out, successive movements of the magnets 66 over the reed switches 76 and 77 cause closure of the reed switch 76 to precede closure of the reed switch 77 each time a magnet 66 passes over them.

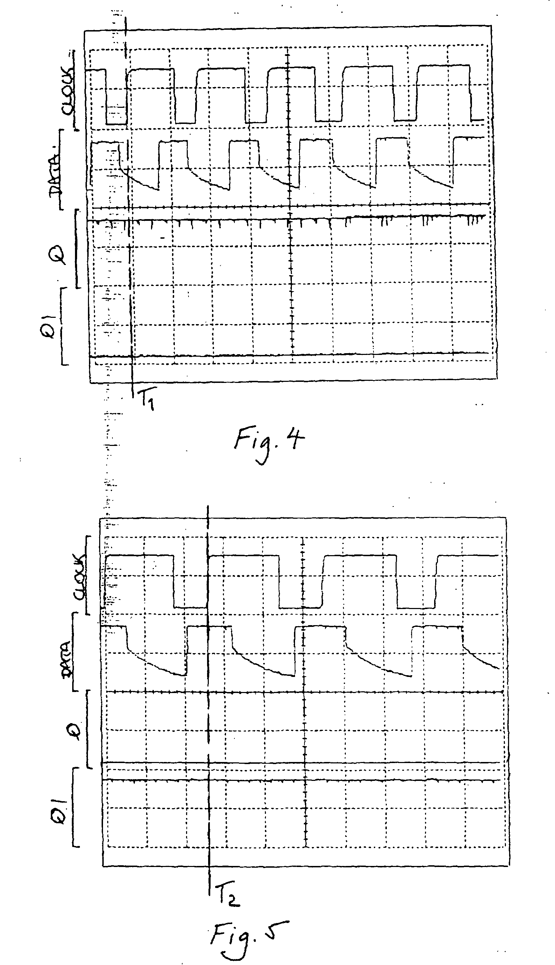

The resulting voltage levels at the clock and data input respectively of the first flip-flop 310 of the circuitry shown in Figure 3, are shown in Figure 4. From this, it will be seen that, at the instant the clock input is pulled high, the'data input is still low. As a result, the Q output of the flip-flop 310 goes low, and its complementary output _Q goes high. This occurs at the instant T₁ shown in Figure 4, and at each successive responding instant in the cyclically changing wave forms.

Conversely, if the rotary part 26 is rotated in the opposite sense, corresponding to a drop-back bite, then the clock input of the flip-flop 310 is pulled high while the data input is still high, because in this instant, it is the reed switch 77 which is closed before the reed switch 76 for a given passage of one of the magnets 66 over these reed switches. Such an instant is indicated at time T₂ in Figure 5, and at each successive corresponding instant in the cyclically changing voltage levels.

At this instant, therefore, the Q output from the flip-flop 310 goes high, and its complimentary output _Q goes low.

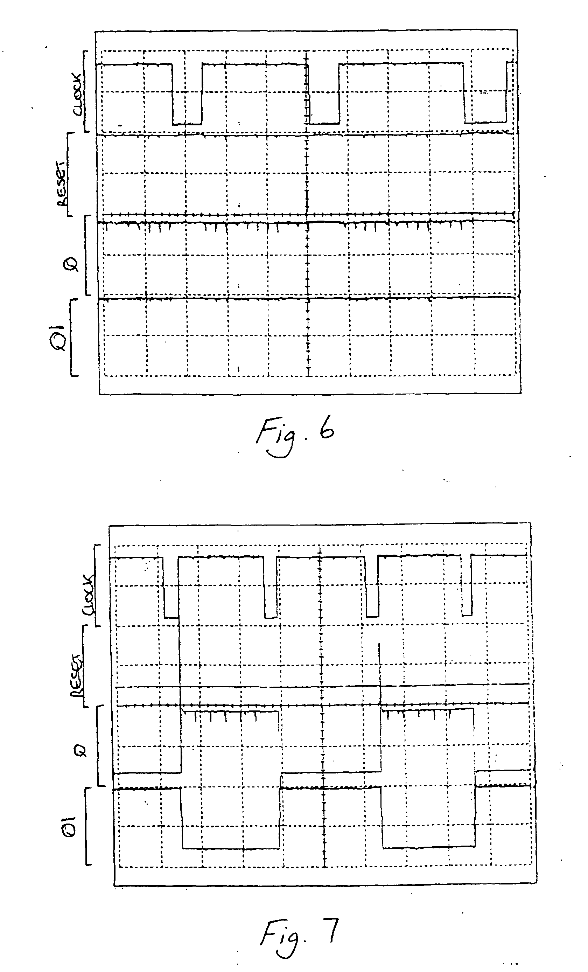

If the set and re-set inputs of the flip-flop 312 are held high, as is the case for a normal bite where fishing line is paid out, with the _Q output of the flip-flop 310 being held high, then both of the outputs of the flip-flop 312 will also be held high, as shown in Figure 6. As a result, a single-tone intermittent audible output is issued from the buzzer 318, its frequency being dependent upon the speed of movement of the line. Its volume and pitch will be dependent upon the setting of the volume and pitch controls 38 and 40 respectively.

In the event that the set and re-set inputs are held low, the Q and _Q outputs from the flip-flop 312 will oscillate in anti-phase, at half the frequency of the clock pulses. As a result, a two-tone audible signal is issued from the buzzer 318 at a frequency which is again dependent upon the speed of movement of the line.

As regards the LED 20, this is illuminated continuously for a normal bite in which the fishing line is paid out, and intermittently for a drop-back bite.

Whilst the illustrated bite detector has been shown as a preferred embodiment of the present invention, it will be appreciated that the invention is not limited to this particular embodiment, and that very many variations and modifications will readily occur to a reader of ordinary skill in the art without taking the resulting detector outside the scope of the present invention. To give a few examples only, the reed switches 76 and 77 could be reversed, or the trigger pulse generator could be connected to the output from the reed switch 77 instead of that of the reed switch 76. The buzzer driver could be connected only to the _Q output of the flip-flop 312 like the LED driver. The reed switches 76 and 77 could be arranged one beside the other on the printed circuit board, even so that they are generally co-linear, provided, with the illustrated arrangement of magnets, there is at least some component of the displacement of the respective centres of the reed switches in the directions of movement of the magnets 66 where they pass over those switches.

## Claims

1. A fish-bite detector having at least one magnet (66) mounted to rotate about a given axis upon longitudinal movement of a fishing line which engages a part of the detector when the latter is in use, such as to change the magnetic field in a predetermined region of the detector in dependence upon such movement, and sensor means (76, 77) provided in the said predetermined region to produce a signal indicative of such movement, **characterised in that** the sensor means (76, 77) comprise two reed switches (76, 77) so arranged that they are generally parallel to the said given axis and so that one of those switches (76 or 77) is switched by the said magnet (66) passing it before the other one of those switches (77 or 76) is switched by the said magnet (66) passing it, whereby the detector can discriminate between different directions of longitudinal movement of the fishing line.

2. A fish-bite detector according to claim 1, **characterised in that** one of the reed switches (76, 77) is connected to the clock input of a bi-stable flip-flop (310), and the other is connected to the data input thereof.

3. A fish-bite detector according to claim 2, **characterised in that** the reed switch (76, 77) which is switched first when the fishing line moves in a direction corresponding to a paying out of the line, is connected to the clock input of the flip-flop (310).

4. A fish-bite detector according to claim 2 or claim 3, **characterised in that** the Q and _Q outputs of the flip-flop (310) are connected to both the set and reset inputs of a second bi-stable flip-flop (312), the clock input of which is connected to receive an output from a trigger pulse generator (314) connected to one of the reed switches (76 or 77) to generate pulses in dependence upon closure of that reed switch (76 or 77), the _Q output of the second flip-flop (312) being fed back to the data input thereof.

5. A fish-bite detector according to claim 4, **characterised in that** the trigger pulse generator (314) is connected to receive signals from that reed switch (76 or 77) which is connected to the clock input of the first-mentioned flip-flop (310).

6. A fish-bite detector according to claim 4 or claim 5, **characterised in that** the _Q output of the second flip-flop (312) is connected to an LED driver (322) which in turn is connected to drive the LED (20).

7. A fish-bite detector according to any one of claims 4 to 6, **characterised in that** Q and _Q outputs from the second flip-flop (312) are connected to a buzzer driver (316) which in turn is connected to a buzzer (318).

8. A fish-bite detector according to claim 7, **characterised in that** the buzzer driver (316) is so constructed as to cause a first audio signal to be issued when the line moves in a longitudinal direction corresponding to a paying-out of the line, and a second audible signal when the line moves in the other longitudinal direction.

## Patentansprüche

1. Fischanbiss-Detektor mit mindestens einem Magneten (66), der montiert ist, sich auf eine Längsbewegung einer Angelschnur hin, die an einem Teil des Detektors angreift, wenn der Letztere in Gebrauch ist, um eine gegebene Achse zu drehen, wie z.B. um in Abhängigkeit von so einer Bewegung das Magnetfeld in einem vorbestimmten Bereich des Detektors zu ändern, und mit Sensormitteln (76, 77), die in dem vorbestimmten Bereich vorgesehen sind, um ein Signal zu erzeugen, das so eine Bewegung anzeigt, **dadurch gekennzeichnet, dass** die Sensormittel (76, 77) zwei Reed-Schalter (76, 77) aufweisen, die so angeordnet sind, dass sie allgemein parallel zu der gegebenen Achse sind, und so, dass einer dieser Schalter (76 oder 77) durch den ihn passierenden Magneten (66) geschaltet wird, bevor der andere dieser Schalter (77 oder 76) durch den ihn passierenden Magneten (66) geschaltet wird, wodurch der Detektor zwischen verschiedenen Richtungen der Längsbewegung der Angelschnur unterscheiden kann.

2. Fischanbiss-Detektor nach Anspruch 1, **dadurch gekennzeichnet, dass** einer der Reedschalter (76, 77) mit dem Takteingang eines bistabilen Flipflop (310) verbunden ist und der andere mit dessen Dateneingang verbunden ist.

3. Fischanbiss-Detektor nach Anspruch 2, **dadurch gekennzeichnet, dass** der Reed-Schalter (76, 77), der zuerst geschaltet wird, wenn sich die Angelschnur in einer Richtung entsprechend einem Auslaufen der Schnur bewegt, mit dem Takteingang des Flipflop (310) verbunden ist.

4. Fischanbiss-Detektor nach Anspruch 2 oder Anspruch 3, **dadurch gekennzeichnet, dass** die Q- und _Q-Ausgänge des Flipflop (310) mit den beiden Setz- und Rücksetzeingängen eines zweiten bistabilen Flipflops (312) verbunden sind, dessen Takteingang verbunden ist, ein Ausgangssignal von einem Triggerimpulsgenerator (314) zu empfangen, der mit einem der Reed-Schalter (76 oder 77) verbunden ist, um in Abhängigkeit vom Schließen des Reedschalters (76 oder 77) Impulse zu erzeugen, wobei das _Q-Ausgangssignal des zweiten Flipflop (312) an dessen Dateneingang rückgeführt wird.

5. Fischanbiss-Detektor nach Anspruch 4, **dadurch gekennzeichnet, dass** der Triggerimpulsgenerator (314) verbunden ist, Signale von dem Reed-Schalter (76 oder 77) zu empfangen, der mit dem Takteingang des zuerst genannten Flipflop (310) verbunden ist.

6. Fischanbiss-Detektor nach Anspruch 4 oder Anspruch 5, **dadurch gekennzeichnet, dass** der _Q-Ausgang des zweiten Flipflop (312) mit einem LED-Treiber (322) verbunden ist, der wiederum verbunden ist, die LED (20) anzusteuern.

7. Fischanbiss-Detektor nach einem der Ansprüche 4 bis 6, **dadurch gekennzeichnet, dass** Q-und _Q-Ausgänge des zweiten Flipflop (312) mit einem Summertreiber (316) verbunden sind, der wiederum mit einem Summer (318) verbunden ist.

8. Fischanbiss-Detektor nach Anspruch 7, **dadurch gekennzeichnet, dass** der Summertreiber (316) so aufgebaut ist, dass er die Ausgabe eines ersten Tonsignals bewirkt, wenn sich die Schnur in einer Längsrichtung entsprechend einem Auslaufen der Schnur bewegt, und eines zweiten Tonsignals, wenn sich die Schnur in der anderen Längsrichtung bewegt.

## Revendications

1. Un détecteur de touches de poissons, comportant au moins un aimant (66), monté pour tourner autour d'un axe donné lors du déplacement longitudinal d'une ligne de pêche qui est en prise avec une partie du détecteur lorsque ce dernier est utilisé, de manière à modifier le champ magnétique dans une région prédéterminée du détecteur selon un tel déplacement, et des moyens capteurs (76, 77) prévus dans ladite région prédéterminée pour produire un signal indicatif d'un tel déplacement, **caractérisé en ce que** les moyens capteurs (76, 77) comprennent deux interrupteurs à tiges (76, 77), agencés de manière qu'ils soient globalement parallèles audit axe donné et de manière que l'un de ces interrupteurs (76 ou 77) soit commuté par ledit aimant (66) passant sur lui avant que l'autre de ces interrupteurs (77 ou 76) soit commuté par le passage dudit aimant (66) sur lui, de manière que le détecteur puisse discriminer entre des directions de déplacement longitudinales différentes de la ligne de pêche.

2. Un détecteur de touches de poissons selon la revendication 1, **caractérisé en ce que** l'un des interrupteurs à tiges (76, 77) est connecté à l'entrée d'horloge d'une bascule bi-stable (310), et l'autre est connecté à son entrée de données.

3. Un détecteur de touches de poissons selon la revendication 2, **caractérisé en ce que** l'interrupteur à tiges (76, 77), qui est commuté le premier lorsque la ligne de pêche se déplace dans une direction correspondant au déroulement de la ligne, est connecté à l'entrée d'horloge de la bascule (310).

4. Un détecteur de touches de poissons selon la revendication 2 ou la revendication 3, **caractérisé en ce que** les sorties Q et _Q de la bascule (310) sont connectées aux deux entrées, d'établissement et de remise à l'état initial, d'une deuxième bascule bi-stable (312), dont l'entrée d'horloge est connectée pour recevoir un signal de sortie venant d'un générateur d'impulsion de déclencheur (314) connecté à l'un des interrupteurs à tiges (76 ou 77) pour générer des impulsions lors de la fermeture de l'interrupteur à tiges (76 ou 77), la sortie _Q de la deuxième bascule (312) étant retournée à son entrée de données.

5. Un détecteur de touches de poissons selon la revendication 4, **caractérisé en ce que** le générateur d'impulsion de déclencheur (314) est connecté pour recevoir des signaux venant de cet interrupteur à tiges (76 ou 77), qui est connecté à l'entrée d'horloge de la première bascule (310) mentionnée.

6. Un détecteur de touches de poissons selon la revendication 4 ou la revendication 5, **caractérisé en ce que** la sortie _Q de la deuxième bascule (312) est connectée à un pilote à LED (322), qui à son tour est connecté pour attaquer la LED (20).

7. Un détecteur de touches de poissons selon l'une quelconque des revendications 4 à 6, **caractérisé en ce que** les sorties Q et _Q venant de la bascule (312) sont connectées à un pilote de vibreur sonore (316), qui a son tour est connecté à un vibreur sonore (318).

8. Un détecteur de touches de poissons selon la revendication 7, **caractérisé en ce que** le pilote de vibreur sonore (316) est construit pour provoquer l'envoi d'un premier signal audio, lorsque la ligne se déplace dans une direction longitudinale correspondant à un déroulement de la ligne, et un deuxième signal audible, lorsque la ligne se déplace dans l'autre direction longitudinale.
